Europäisches Patentamt

European Patent Office

Office européen des brevets

(11) Veröffentlichungsnummer: **0 144 548**
**B1**

# (12) EUROPÄISCHE PATENTSCHRIFT

(45) Veröffentlichungstag der Patentschrift:
29.03.89

(21) Anmeldenummer: 84110273.4

(22) Anmeldetag: 29.08.84

(51) Int. Cl.⁴: **F 16 K 31/06**, G 05 D 7/06

(54) **Elektromagnetisch betätigtes Durchflusssteuerventil.**

(30) Priorität: 13.10.83 DE 3337259

(43) Veröffentlichungstag der Anmeldung:
19.06.85 Patentblatt 85/25

(45) Bekanntmachung des Hinweises auf die Patenterteilung:
29.03.89 Patentblatt 89/13

(84) Benannte Vertragsstaaten:
AT BE CH DE FR GB IT LI NL SE

(56) Entgegenhaltungen:
AT-B-242 291
DE-A-1 650 579
DE-A-2 245 255
DE-A-2 246 624
DE-A-2 303 450
DE-A-2 335 460
DE-A-2 813 752
DE-A-3 011 985
DE-A-3 015 522
DE-A-3 118 898
DE-A-3 120 160
DE-A-3 133 060
DE-A-3 305 307
FR-A-2 472 774
US-A-3 817 488
US-A-3 942 759
US-A-3 961 644
US-A-4 196 751

(73) Patentinhaber: Atlas Fahrzeugtechnik GmbH,
Eggenpfad 26, D-5980 Werdohl (DE)

(72) Erfinder: Brandner, Burkhard, Bornstrasse 2, D-5980
Werdohl (DE)
Erfinder: Blauhut, Reinhold, Eggenpfad 24, D-5980
Werdohl (DE)
Erfinder: Stübs, Albert, Am Weiten Blick 35,
D-5880 Lüdenscheid (DE)

(74) Vertreter: Hassler, Werner, Dr., Postfach 17 04
Asenberg 62, D-5880 Lüdenscheid (DE)

## Beschreibung

Die Erfindung betrifft ein elektromagnetisch durch Änderung des Tastverhältnisses betätigtes Durchflußsteuerventil für gasförmige Medien, mit einer Ventilkammer, mit einem Eintrittskanal und zwei Austrittskanälen, mit einem Ventilsitz an der Mündung jedes Austrittskanals und mit einem getakteten als Anker wirkenden Ventilkörper in einem als Ventilkammer dienenden Spalt zwischen den Kernen von zwei Elektromagneten.

Das Durchflußsteuerventil kann als Zweiwegeventil oder als Dreiwegeventil ausgebildet sein.

Ein Durchflußsteuerventil der eingangs genannten Art ist in der DE-A-3 305 307 beschrieben. Dort ist der Ventilkörper an dem Kern einer Magnetspule ausgebildet. Infolgedessen besitzt der Ventilkörper eine große Masse und mechanische Trägheit. Der Ventilkörper stellt sich dann unter der Wirkung der Tastwellenform auf eine mittlere Stellung ein, die näherungsweise dem Tastverhältnis proportional ist. Die Stellung des Ventilkörpers hängt von den Massenverhältnissen, den Reibungsverhältnissen und anderen Größen ab, die sich von Bauteil zu Bauteil und auch im Laufe der Lebensdauer des Durchflußsteuerventils ändern. Infolgedessen ist der Durchfluß dieses Durchflußsteuerventils nicht in ausreichendem Maße reproduzierbar.

Die DE-A-2 246 624 beschreibt ein Durchflußsteuerventil der gattungsgemäßen Art. Dort ist eine Membran am Rande fest eingespannt. Es ist angegeben, daß die Membran getaktet werden soll. Infolge der Randeinspannung erhält man keine reproduzierbaren Verhältnisse.

Die DE-A-3 015 522 beschreibt ein Magnetventil mit einem plattenförmigen, frei beweglichen Ventilkörper. Derselbe ist vergleichsweise träge, so daß dieses Ventil für eine Taktung, insbesondere mit hoher Frequenz nicht geeignet ist.

Aufgabe der Erfindung ist die Bereitstellung eines Durchflußsteuerventils, das eine genaue Steuerung oder Regelung des Durchflusses und/oder des Druckes ermöglicht.

Diese Aufgabe wird nach der Erfindung dadurch gelöst, daß der Ventilkörper als membranartige, freibewegliche, ferromagnetische Ventilplatte ausgebildet ist und daß die Spulen der Elektromagnete an Gegentaktausgänge eines Impulsgenerators mit einstellbarem Tastverhältnis angeschlossen sind.

Das Durchflußsteuerventil nach der Erfindung unterscheidet sich insofern vom Stand der Technik, als der Ventilkörper einerseits frei beweglich und andererseits membranartig, also mit vernachlässigbarer mechanischer Trägheit, ausgebildet ist. Somit folgt der Ventilkörper jedem einzelnen Tastimpuls. Hierdurch erreicht man eine binäre Steuerung des Ventilkörpers. Der Durchfluß ergibt sich als Integralwert der Tastintervalle. Der Durchfluß ist dem Tastverhältnis proportional. Das Tastverhältmis der Impulsfolge legt das Verhältnis der Offenstellung des Ventils zu der Schließstellung an einem Ventilsitz fest, so daß der Durchfluß durch entsprechende Änderung der relativen Dauer der Offenstellung verändert werden kann. Dadurch, daß sich die Ventilplatte entsprechend der Impulsfrequenz und dem Tastverhältnis bewegt, führt dieselbe entsprechende Schwingungen aus, die zu dem gewünschten Ergebnis führen.

Die Impulsfrequenz muß auf das Schwingungsverhalten des gasförmigen Mediums sowie auf das Schwingungsverhalten der Anschlußleitungen abgestimmt sein. Die Impulsfrequenz liegt normalerweise im einem Bereich bis zu 1 kHz, vorzugsweise zwischen 50 und 100 Hz. Das Tastverhältnis variiert entsprechend der Einstellung der Durchflußmenge zwischen 0 und 100 %. Der Durchfluß ist dem Tastverhältnis streng proportional, da die frei bewegliche, nahezu trägheitslose Ventilplatte den einzelnen Tastimpulsen verzögerungsfrei folgen kann.

Eine Ausbildung als Zweiwegeventil erreicht man dadurch, daß ein Anschlußkanal abgeschlossen ist.

Wenn beide Anschlußkanäle benutzt werden, sind dieselben vorzugsweise Austrittskanäle. Man kann dann den Ausgangsdurchfluß der beiden Kanäle dadurch in einem bestimmten Verhältnis festlegen, daß die beiden Anschlußkanäle unterschiedlichen Querschnitt haben.

Ausführungsformen der Erfindung werden im folgenden unter Bezugnahme auf die anliegenden Zeichnungen erläutert, in denen darstellen:

Fig 1.    eine ersre Ausführungsform des Durchflußsteuerventils,

Fig. 2    ein Impulsdiagramm für den Sperrzustand des Durchflußsteuerventils,

Fig. 3    ein Impulsdiagramm für den Öffnungszustand des Durchflußsteuerventils und

Fig. 4    eine weitere Ausführungsform der Erfindung als Dreiwegeventil.

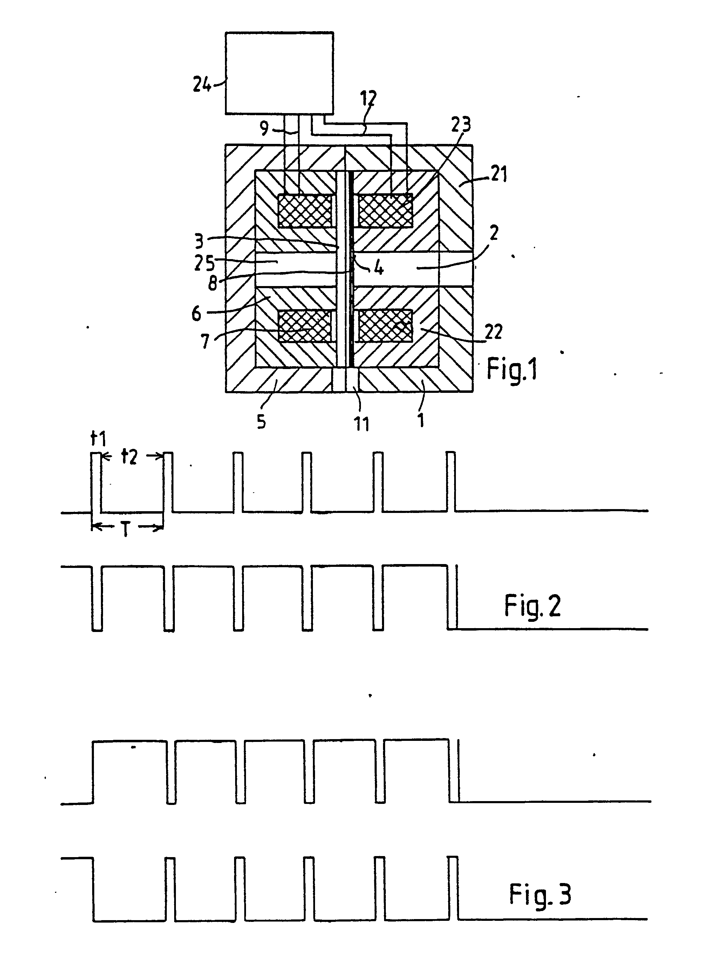

Das Durchflußsteuerventil nach Fig. 1 ist ein Zweiwegeventil. Das Ventilgehäuse ist im wesentlichen zylindrisch ausgebildet und umfaßt zwei Gehäuseschalen 1 und 5. In der Achse der Gehäuseschale 1 ist ein Anschlußkanal 2 ausgebildet, der vorzugsweise ein Austrittskanal ist. Der Anschlußkanal 2 mündet in eine Ventilkammer 3. Am Stirnende des Anschlußkanals 2 ist ein Ventilsitz 4 vorgesehen. Die Gehäuseschale 1 nimmt einen Topfmagneten 22 mit einer Spule 23 auf. Der Anschlußkanal 2 reicht durch die Achse des Topfmagneten 22.

Die Gehäuseschale 5 nimmt ebenfalls einen Topfmagneten 6 mit einer Spule 7 auf. In der Achse des Topfmagneten 6 ist ein Anschlußkanal 25 ausgebildet. Dieser Anschlußkanal ist jedoch durch die Gehäuseschale 5 abgeschlossen.

Die Ventilkammer 3 bildet einen Spalt zwischen den beiden Topfmagneten 22 und 6. In die Ventilkammer 3 mündet ein Anschlußkanal 11. Außerdem nimmt die Ventilkammer eine membranartige, frei bewegliche Ventilplatte 8 auf, die aus einem ferromagnetischen Werkstoff besteht und jeweils einen Anker für die beiden Topfmagnete 22 und 6 dargestellt.

Die Spulen 23 und 7 sind über Leitungen 12 und 9 an die Gegentaktausgänge eines Impulsgenerators 24 angeschlossen. Der Impulsgenerator 24 arbeitet mit einer festen Frequenz, die unter 1 kHz, vorzugsweise zwischen 50 und 100 Hz, liegt. Die Spulen 23 und 7 sind also wechselweise erregt, so daß während jeder Halbwelle des Impulsgenerators eine Spule erregt ist und die Ventilplatte 8 an der Mündung 4 des zugeordneten Anschlußkanals 2 bzw. 25 anliegt.

Fig. 2 zeigt die Wellenformen an den Gegentaktausgängen des Impulsgenerators 24 für ein Tastverhältnis nahe 0 %. Während der Impulsperiode T erscheint ein Impuls mit einer Dauer t1 sowie eine Impulspause mit einer Dauer t2. Es gilt die Beziehung t1 + t2 = T. Z. B. wird die Spule 23 mit dieser Impulsfolge beaufschlagt. Die Spule 7 wird dann mit der in der unteren Hälfte der Fig. 2 dargestellten Gegentaktimpulsfolge beaufschlagt.

Die Ventilplatte wird jeweils im Takt der Impulsperiode T bewegt und liegt während der Impulsdauer t1 an dem Ventilsitz 4 des Anschlußkanals 2, während der Impulspause t2 an dem Ventilsitz des Anschlußkanals 25 an. Da der Anschlußkanal 25 abgesperrt ist, ist derselbe für Funktion des Ventils in dieser Ausführungsform unwesentlich.

Wenn die Impulsdauer t1 im Vergleich zur Impulspause t2 klein ist, wenn also t1/t2 wesentlich kleiner als 1 ist, so ist die relative Öffnungsdauer für das Ventil nur klein. Dementsprechend ist der Durchfluß klein. Dieses ist in Fig. 2 dargestellt.

Fig. 3 zeigt den entgegengesetzten Extremfall, bei den die Impulsdauer t1 im Verhältnis zur Impulspause t2 groß ist. In diesem Fall geht das Tastverhältnis gegen 100 %. Das Ventil hat einen maximalen Durchfluß.

Man erkennt aus den Fig. 2 und 3 ohne weiteres, daß durch Einstellung des Tastverhältnisses des Impulsgenerators 24 jeder Durchfluß zwischen dem Durchfluß 0 und dem maximalen Durchfluß von 100 % eingestellt werden kann. Die Einstellung ist auch außerordentlich stabil, da die relative Öffnungzeit des Ventils gesteuert wird. Selbstverständlich kann das Ventil auch ohne weiteres in einen Regelkreis eingebaut werden.

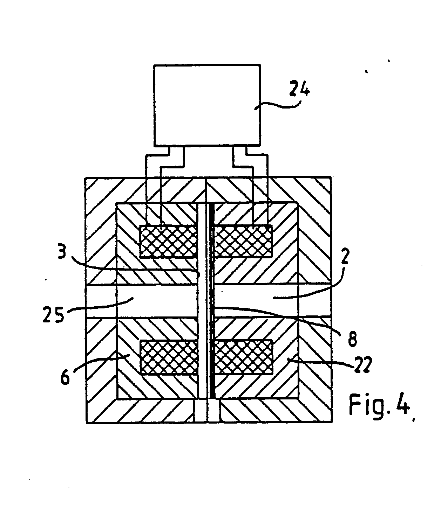

Fig. 4 zeigt eine Ausführungsform der Erfindung als Dreiwegeventil. Auch der Anschlußkanal 25 in der Kernachse des Topfmagneten 6 ist nach außen geführt und mit einer Anschlußleitung verbunden. Die Anschlußkanäle 2 und 25 dienen in diesem Fall zweckmäßigerweise als Austrittskanäle, während der Anschlußkanal 11 als Eintrittkanal dient.

Die Durchflüsse durch die Austrittskanäle 2 und 25 werden wechselweise entsprechend dem Tastverhältnis gesteuert.

Bei einem Tastverhältnis von 50 % sind offenbar die Durchflüsse in beiden Austrittskanälen gleich, vorausgesetzt, daß beide Austrittskanäle einen gleichen Durchmesser haben. Durch verschiedene Durchmesser der Austrittskanäle 2 und 25 kann man beliebige Maximalflüsse für beide Austrittskanäle einstellen.

**Patentansprüche**

1. Elektromagnetisch durch Änderung des Tastverhältnisses betätigtes Durchflußsteuerventil für gasförmige Medien, mit einer Ventilkammer, mit einem Eintrittskanal und zwei Austrittskanälen, mit einem Ventilsitz an der Mündung jedes Austrittskanals und mit einem getakteten als Anker wirkenden Ventilkörper in einem als Ventilkammer (3) dienenden Spalt zwischen den Kernen von zwei Elektromagneten (6, 22), dadurch gekennzeichnet, daß der Ventilkörper als membranartige, freibewegliche, ferromagnetische Ventilplatte (8) ausgebildet ist und daß die Spulen (7, 23) der Elektromagnete (6, 22) an Gegentaktausgänge eines Impulsgenerators (13) mit einstellbarem Tastverhältnis angeschlossen sind.

2. Durchflußsteuerventil nach Anspruch 1, dadurch gekennzeichnet, daß ein Anschlußkanal (2 oder 25) abgeschlossen ist.

3. Durchflußsteuerventil nach Anspruch 1 oder 2, dadurch gekennzeichnet, daß die beiden Anschlußkanäle (2, 25) unterschiedlichen Querschnitt haben.

**Claims**

1. Flow-control valve, electromagnetically operated by changing the mark/space ratio, for gaseous media, having a valve chamber, having one input channel and two output channels, having a valve seat at the mouth of each output channel and having a pulsed valve body acting as the armature in a gap serving as the valve chamber (3) between the cores of two electromagnets (6, 22), characterised in that the valve body is constructed as a diaphragm-like, freely movable ferromagnetic valve plate (8), and in that the coils (7, 23) of the electromagnets (6, 22) are connected to push-pull outputs of a pulse generator (13) of adjustable mark/space ratio.

2. Flow-control valve according to Claim 1, characterised in that one connection channel (2 or 25) is closed off.

3. Flow-control valve according to Claim 1 or 2, characterised in that the two connection
channels (2, 25) have different cross sections.

## Revendications

1. Vanne de réglage de débit, à commande électromagnétique, contrôlée en modifiant le rapport de l'onde rectangulaire, destinée à des fluides gazeux, équipée d'une chambre de soupape, d'un conduit d'entrée et de deux conduits de sortie, pourvue d'un siège de soupape à l'orifice de chaque conduit de sortie et munie d'une soupape cadencée agissant comme une armature dans un intervalle compris entre les noyaux de deux électro-aimants (6, 22), ledit intervalle servant de chambre de soupape (3), caractérisée en ce que la soupape est réalisée sous la forme d'un disque (8) ferromagnétique, libre de se mouvoir, semblable à une membrane et en ce que les bobines (7, 23) des électro-aimants (6, 22) sont reliées à des sorties à signaux opposés d'un générateur d'impuisions (13) ayant un rapport de l'onde rectangulaire réglable.

2. Vanne de réglage de débit suivant ia revendication 1, caracterisée en ce qu'un conduit de raccordement (2 ou 25) est fermé.

3. Vanne de reglage de débit suivant l'une des revendications 1 ou 2, caractérisée en ce que les deux conduits de raccordement (2, 25) ont des sections différentes.

EP 0 144 548 B1

Fig.1

Fig.2

Fig.3

1

Fig. 4.